# EUROPEAN PATENT APPLICATION

(11) **EP 4 331 863 A1**
(43) Date of publication of application: **06.03.2024**
(21) Application number: 22193918.4
(22) Date of filing: 05.09.2022
(51) Int. Cl.: B60C 3/00, B60C 13/02

(54) **A TIRE AND A PAIR OF TIRES FOR A DUAL WHEEL**

(71) Applicant: VOLVO TRUCK CORPORATION, 405 08 Göteborg (SE)
(72) Inventor: K S, Madhuchandra, 560050 Bangalore (IN); YVK, Anjan, 560024 Bangalore (IN)
(74) Representative: Valea AB

(57) **Abstract**

A tire (10) for a dual wheel (1), said tire (10) comprising a first sidewall (SW1) and an opposite second sidewall (SW2). The first sidewall (SW1) being provided with ridge means (9a, 9b), and the ridge means (9a, 9b) are configured such that when two such tires (10) are arranged side-by-side on a dual wheel (1) with ridge means (9a, 9b) of one of said two tires (10) facing another ridge means (9b, 9a) of another one of said two tires (10) and the two tires (10) are deformed by a vehicle load from the vehicle (8), the facing ridge means (9a, 9b) overlap along a rotational axis (7) of the dual wheel (1), said overlap occurring along at least an angular portion (A) of the circumference of the dual wheel (1).

## Description

### TECHNICAL FIELD

The present disclosure relates to dual wheels used on vehicles, such as trucks and trailers. Specifically, the present invention relates to prevention of objects getting into a space between adjacent wheels of a dual wheel.

The disclosure can be applied in heavy-duty vehicles, such as trucks, buses, and construction equipment, and for trailers used with such vehicles. Although the disclosure be described with respect to a dual wheel, the disclosure is not restricted to dual wheel uses, but may also be used in other multiple wheels, such as triple wheels.

### BACKGROUND

Dual wheels are used on a vehicle to distribute load from the vehicle over a larger area of a surface on which the vehicle is supported by the wheels. In a dual wheel, two tires are attached to the vehicle side-by-side such that the two tires are rotatable about a same rotational axis. Typically, the tires are supported on a same wheel axle and often on a single rim or joint rim supporting both tires of each dual wheel.

A space is provided between the adjacent tires such that the tires do not touch in normal operation of the vehicle. A problem with dual wheels is that foreign objects, such as rocks, may be forced into the intermediate space(s) between the tires, leading to imbalance and premature wear of the tires, potentially leading to puncture of one or more of the tires.

KR0166514B1 discloses a dual wheel comprising two tires with a respective sidewall facing an intermediate space between the tires. Each tire is provided with a circumferential ridge protruding along a central axis of the tire from the respective sidewall into the intermediate space. The two ridges have a same diameter and jointly bridge across most of the intermediate space to thereby prevent foreign objects from being forced into the intermediate space. The ridges are provided with heat dissipation holes to allow heated air to leave the intermediate space.

KR20070018300A discloses a dual wheel comprising two tires with a respective sidewall facing an intermediate space between the tires. The dual wheel further comprises with a separate gap cover member positioned in the intermediate space, said gap cover member extending circumferentially about the rotational axis of the tires for sealing off the intermediate space such that foreign objects cannot move into the intermediate space.

### SUMMARY

An object of the present disclosure is to provide alternative technology for preventing foreign objects to enter the intermediate space between the two tires of the dual wheel.

The tires of a pair of tires for a dual wheel could be of different design sold in matching pairs, following the first aspect described below. Alternatively, the tires of said pair of tires could be identical and sold separately following a second or third aspect described below. Claims 1-6 claim protection covering pairs of tires, whilst claims 7-13 claim protection for a single tire designed to be used together with an identical tire.

According to the first aspect, the above-mentioned object is achieved by a pair of tires according to claim 1, with alternative embodiments defined by dependent claims 2-6. The pair of tires comprises a first tire and a second tire to be arranged side-by-side when mounted on the dual wheel such that a first sidewall of the first tire faces a second sidewall of the second tire, with an intermediate space formed between the first sidewall and the second sidewall. The first sidewall is provided with first ridge means protruding from the first sidewall into the intermediate space. The second sidewall is provided with a second ridge means protruding from the second sidewall into the intermediate space. Further, the first ridge means and the second ridge means are configured such that, when the pair of tires is mounted on the dual wheel and the pair of tires is deformed by a vehicle load from the vehicle, the first ridge means and the second ridge means overlap along a rotational axis of the dual wheel, said overlap occurring along at least an angular portion of the circumference of the dual wheel.

The first ridge means and the second ridge means together bridge the intermediate space between the first sidewall and the second sidewall, thereby preventing foreign object entering the intermediate space. By configuring the first ridge means and the second ridge means such that they overlap along the rotational axis of the dual wheel, a foreign object would have to pass through a meandering path between the first ridge means and the second ridge means to be able to enter the intermediate space. Such a configuration of the dual tire thus further mitigates objects entering the intermediate space without requiring pressure of even any contact at all between the first ridge means and the second ridge means. Reduced contact and reduced contact pressure between the first ridge means and the second ridge means reduces wear and risk of damage to the tires of the dual wheel. At loading of the dual wheel by the vehicle, a lower portion of each tire tens to be deformed to a lower height and a larger width. Hence, the first sidewall and the second sidewall move closer to each other at loading of the dual tire at a lower portion of each tire. The first ridge means and the second ridge means are typically designed with this is mind, such that they have a suitable relative position or gap at the lower portion of the tires when the dual wheel is loaded. This also means that the gap between the first ridge means and the second ridge means typically is larger at an upper portion of the tires, potentially large enough to bring the first ridge means and the second ridge means to a position where they do not overlap along the rotational axis of the dual wheel at an upper portion of the dual wheel. Since foreign object tend to be forced towards the intermediate space from the side of the dual wheel facing the road, the overlap is most needed at the lower portion of the dual wheel.

The first ridge means may comprise one or more first ridge portions being radially offset from one or more corresponding second ridge portions of said second ridge means, with respect to the rotational axis.

The radial offset enables use of thicker geometries of the first and second ridge means respectively and thus reduced the risk of a foreign object deforming the first and second ridge means respectively.

The first ridge means may comprise one first ridge portion extending along a whole circumference of the first sidewall.

By arranging the first ridge portion such that it extends along a whole circumference of the first sidewall, a continuous ridge is provided around the circumference, thus avoiding gaps at the end of the first ridge portion, thus reducing the risk of foreign objects, such as dirt, gravel, and stones, entering the intermediate space between the tires of the dual wheel. Further, the rigidity of the first ridge portion is improved, since the first ridge portion does not have any free ends.

The second ridge means may comprise one second ridge portion extending along a whole circumference of the second sidewall.

By arranging the second ridge portion such that it extends along a whole circumference of the first sidewall, a continuous ridge is provided around the circumference, thus avoiding gaps at the end of the second ridge portion, thus reducing the risk of foreign objects, such as dirt, gravel, and stones, entering the intermediate space between the tires of the dual wheel. Further, the rigidity of the second ridge portion is improved, since the second ridge portion does not have any free ends.

The first ridge means may be provided radially inwards of the second ridge means with respect to the rotational axis.

By providing the ridge means at different radial distance from the rotational axis of the dual wheel, the height/extend of the respective ridges can be increased without reducing the size of the other ridge means. This enables increased dimension of the ridge means, and thus enables use of more robust ridge means, withstanding higher local pressures from foreign objects forced against the ridge means.

According to a second aspect of the present disclosure, the above-mentioned object is also achieved by a tire according to claim 6, with alternative embodiments defined by dependent claims 7-12.

The tire is for a dual wheel and comprises a first sidewall and an opposite second sidewall. The first sidewall is provided with first ridge means and the second sidewall is provided second ridge means. The first ridge means and the second ridge means are configured such that when two such tires are arranged side-by-side on a dual wheel with first ridge means of one tire facing second ridge means of another tire and the two tires are deformed by a vehicle load from the vehicle, the facing first and second ridge means overlap along a rotational axis of the dual wheel, said overlap occurring along at least an angular portion of the circumference of the dual wheel.

The first ridge means and the second ridge means together bridge the intermediate space between the first sidewall and the second sidewall, thereby preventing foreign object entering the intermediate space. By configuring the first ridge means and the second ridge means such that they overlap along the rotational axis of the dual wheel, a foreign object would have to pass through a meandering path between the first ridge means and the second ridge means to be able to enter the intermediate space. Such a configuration of the dual tire thus further mitigates objects entering the intermediate space without requiring pressure of even any contact at all between the first ridge means and the second ridge means. Reduced contact and reduced contact pressure between the first ridge means and the second ridge means reduces wear and risk of damage to the tires of the dual wheel.

The first ridge means and second ridge means may be configured such that adjacent first ridge means and second ridge means of the two tires, under normal operating conditions, do not touch when the two tires are mounted on the dual wheel.

Normal operating conditions do not include short-term impacts caused by passing uneven terrain at speed, but rather relate to driving on flat roads at normal operating speeds with normal loads for which the vehicle and tire are rated. By avoiding prolonged contact between the first ridge means and the second ridge means, friction between the first ridge means and the second ridge means is mitigated. Friction cause heating and premature wear of the tires.

The first ridge means may comprise one or more first ridge portions being radially offset from one or more corresponding second ridge portions of said second ridge means, with respect to the rotational axis.

The radial offset enables use of thicker geometries of the first and second ridge means respectively and thus reduced the risk of a foreign object deforming the first and second ridge means respectively.

The first ridge means may comprise one first ridge portion extending along a whole circumference of the first sidewall.

By arranging the first ridge portion such that it extends along a whole circumference of the first sidewall, a continuous ridge is provided around the circumference, thus avoiding gaps at the end of the first ridge portion, thus reducing the risk of foreign objects, such as dirt, gravel, and stones, entering the intermediate space between the tires of the dual wheel. Further, the rigidity of the first ridge portion is improved, since the first ridge portion does not have any free ends.

The second ridge means may comprise one second ridge portion extending along a whole circumference of the second sidewall.

By arranging the second ridge portion such that it extends along a whole circumference of the first sidewall, a continuous ridge is provided around the circumference, thus avoiding gaps at the end of the second ridge portion, thus reducing the risk of foreign objects, such as dirt, gravel, and stones, entering the intermediate space between the tires of the dual wheel. Further, the rigidity of the second ridge portion is improved, since the second ridge portion does not have any free ends.

The first ridge means may be provided radially inwards of the second ridge means with respect to the rotational axis.

According to a third aspect of the present disclosure, the above-mentioned object is also achieved by a tire for a dual wheel. The tire comprises a first sidewall and an opposite second sidewall. The first sidewall is provided with ridge means, and the ridge means is configured such that when two such tires are arranged side-by-side on a dual wheel with ridge means of one of said two tires facing another ridge means of another one of said two tires and the two tires are deformed by a vehicle load from the vehicle, the facing ridge means overlap along a rotational axis of the dual wheel, said overlap occurring along at least an angular portion of the circumference of the dual wheel.

The first ridge means and the second ridge means together bridge the intermediate space between the first sidewall and the second sidewall, thereby preventing foreign object entering the intermediate space. By configuring the first ridge means and the second ridge means such that they overlap along the rotational axis of the dual wheel, a foreign object would have to pass through a meandering path between the first ridge means and the second ridge means to be able to enter the intermediate space. Such a configuration of the dual tire thus further mitigates objects entering the intermediate space without requiring pressure of even any contact at all between the first ridge means and the second ridge means. Reduced contact and reduced contact pressure between the first ridge means and the second ridge means reduces wear and risk of damage to the tires of the dual wheel.

According to a fourth aspect of the present disclosure, the above-mentioned object is also achieved by a dual wheel according to claim 14.

The dual wheel comprises a pair of tires according to any one of claims 1-5 or two tires according to any one of claims 6-10.

According to a fifth aspect of the present disclosure, the above-mentioned object is also achieved by a vehicle comprising at least one of the above-described dual wheel.

The vehicle may be a truck, a bus, a tractor, a construction machine, or a trailer.

The above aspects, accompanying claims, and/or examples disclosed herein above and below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of embodiments of the invention cited as examples.

All figures are schematic and not drawn to scale.
Figs. 1a-1c schematically illustrate a dual wheel according to a first embodiment of the present disclosure.
Figs. 2a-2c schematically illustrate a dual wheel according to a second embodiment of the present disclosure.
Figs. 3a-3d schematically illustrate a dual wheel according to a third embodiment of the present disclosure.
Figs. 4a-4c schematically illustrate a dual wheel according to a fourth embodiment of the present disclosure.

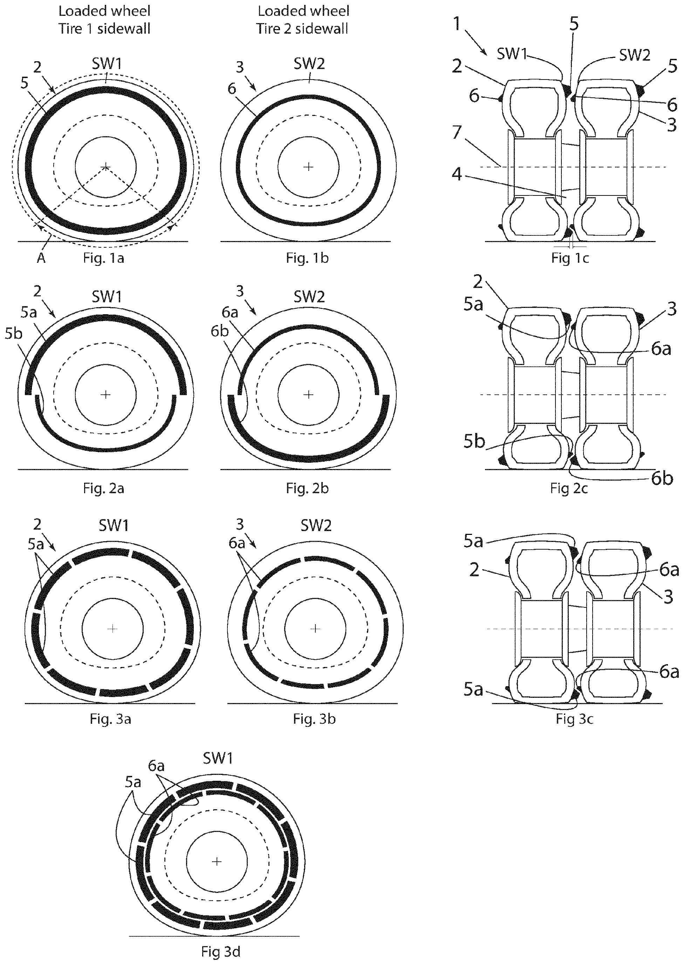

Figs. 1a, 2a, 3a and 4a show a respective embodiment of a first tire sidewall.

Figs. 1b, 2b, 3b and 4b show a respective embodiment of a second tire sidewall.

Figs. 1c, 2c, 3c and 4c show a respective cross-sectional schematic view of a respective embodiment of a dual wheel.

Fig. 3d shows how the two tires of fig. 3c can be rotationally aligned to combine radial ventilation and radial protection against foreign objects entering between tires of the dual wheel shown. This figure merely shows a schematic cross-sectional view of a plurality of first ridge portions being radially offset from one or more corresponding second ridge portions.

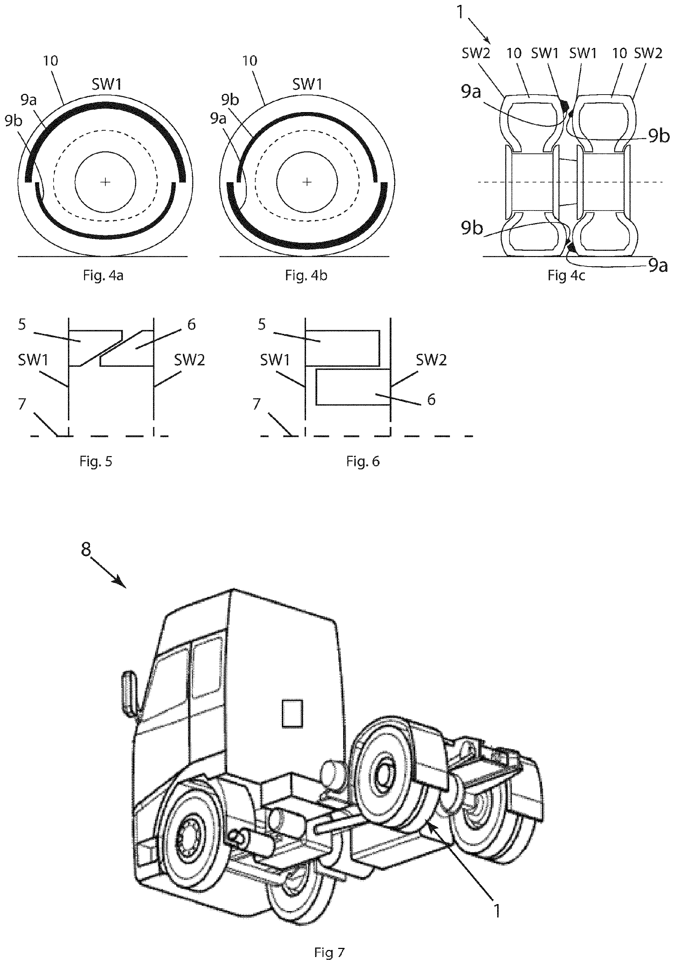

Fig. 5 shows a schematic cross-sectional view of an upper portion of a two cooperating ridge means of a respective tire of a dual wheel, said ridge means being configured with no radial offset. This figure is not drawn to scale.

Fig. 6 shows a schematic cross-sectional view of an upper portion of a two cooperating ridge means of a respective tire of a dual wheel, said ridge means being configured with radial offset providing for a greater overlap and larger dimensioning of the ridge means. This figure is not drawn to scale.

Fig. 7 shows a vehicle comprising two rear dual wheels.

### DETAILED DESCRIPTION OF EXAMPLE EMBODIMENTS OF THE INVENTION

With reference to the appended drawings, below follows a more detailed description of embodiments of the present disclosure cited as examples.

As mentioned above, an object of the present disclosure is to provide an alternative design of a dual wheel for preventing foreign objects to enter the intermediate space between the two tires of the dual wheel.

When studying figs. 1a-b, 2a-b, 3a-b and 4a-b, it should be understood that the tires are shown in a deformed state, said deformation being caused by loading from a vehicle to which the dual wheel is attached (vehicle not shown in these figures). Each tire is round when not loaded.

The general idea of the present disclosure is to provide ridge means in the form of one or more ridges/protrusions on at least one sidewall of each tire of the dual wheel, said ridge means being configured to overlap along a rotational axis of the dual wheel, as shown schematically in figs. 5 and 6. The ridge means are typically provided in the form of one or more ridges or ridge portions protruding from facing tire sidewalls of the dual wheel. The ridge means are typically integrally formed with the rest of the tire at manufacturing of each respective tire of the dual wheel, but could in an embodiment alternatively be provided in the form of ridges attached to an existing tire by any suitable method, such as by vulcanization or use of a suitable adhesive.

On a dual wheel, only one sidewall of each tire is facing a sidewall of the other tire. Hence, the ridge means is needed only on one side of each tire, although a tire could be provided with ridge means on both sidewalls of the tire as further described below.

When deciding on the positioning and shaping the ridge means of each facing sidewall, due care has to be taken to ensure that opposing ridge means of tires used together on a dual wheel fit together such that the ridge means overlap along the rotational axis of the dual wheel. For example, as shown in fig. 4a, a tire 10 provided with ridge means 9a, 9b on only one sidewall can be used together with an identical tire 10 (fig. 4b) on a dual wheel 1 (fig. 4c) with the tires 10 rotated such that the ridge means 9a, 9b of one tire 10 fits with a corresponding gap in the ridge means 9a, 9b of the other tire 10. Hence, this specific design of the ridge means 9a, 9b is such that identical tires can be used together on a dual wheel even though only one sidewall of the tire 10 is provided with ridge means, yet allowing facing ridge means to overlap along the rotational axis of the dual wheel when the identical tires are used together on a dual wheel, as shown in fig. 4c. Use of only one tire design, for a dual wheel reduces cost and supply chain complexity. However, a tire could alternatively also be provided with further ridge means on the opposite sidewall of a tire, such as in the embodiment shown in fig. 2a-c, enabling greater variation of the configuration of the ridge means since two differently designed ridge means can be provided on the opposing sidewalls of a tire. Embodiments with two differently designed ridge means on opposing sidewalls of a tire are shown in fig. 1a-c and 3a-c.

In other words, the present disclosure can be realized in a variety of configurations, as further described below. A pair of tires can be provided, where the tires are designed to be used together. Alternatively, a single tire can be provided, designed to be used on a dual wheel with an identical tire. The single tire could either be provided with ridge means on only one of its two opposite sidewalls, or on both of its opposite sidewalls.

### Pair of tires

A pair of tires is proposed herein. The pair of tires comprises a first tire 2 and a second tire 3 to be arranged side-by-side when mounted on the dual wheel 1 such that a first sidewall SW1 of the first tire 2 faces a second sidewall SW2 of the second tire 3, with an intermediate space 4 formed between the first sidewall SW1 and the second sidewall SW2. The first sidewall SW1 is provided with first ridge means 5 protruding from the first sidewall SW1 into the intermediate space 4. The second sidewall SW2 is provided with a second ridge means 6 protruding from the second sidewall SW2 into the intermediate space 4. Further, the first ridge means 5 and the second ridge means 6 are configured such that, when the pair of tires is mounted on the dual wheel 1 and the pair of tires is deformed by a vehicle load from the vehicle 8, the first ridge means 5 and the second ridge means 6 overlap along a rotational axis 7 of the dual wheel 1, said overlap occurring along at least an angular portion A of the circumference of the dual wheel 1.

The first ridge means 5 and the second ridge means 6 together bridge the intermediate space between the first sidewall and the second sidewall, thereby preventing foreign object entering the intermediate space. By configuring the first ridge means 5 and the second ridge means 6 such that they overlap along the rotational axis of the dual wheel, a foreign object would have to pass through a meandering path between the first ridge means 5 and the second ridge means 6 to be able to enter the intermediate space. Such a configuration of the dual tire thus further mitigates objects entering the intermediate space without requiring pressure of even any contact at all between the first ridge means 5 and the second ridge means 6. Reduced contact and reduced contact pressure between the first ridge means 5 and the second ridge means 6 reduces wear and risk of damage to the tires of the dual wheel. At loading of the dual wheel by the vehicle, a lower portion of each tire tens to be deformed to a lower height and a larger width. Hence, the first sidewall and the second sidewall move closer to each other at loading of the dual tire at a lower portion of each tire. The first ridge means 5 and the second ridge means 6 are typically designed with this is mind, such that they have a suitable relative position or gap at the lower portion of the tires when the dual wheel is loaded. This also means that the gap between the first ridge means 5 and the second ridge means 6 typically is larger at an upper portion of the tires, potentially large enough to bring the first ridge means 5 and the second ridge means 6 to a position where they do not overlap along the rotational axis of the dual wheel at an upper portion of the dual wheel. Since foreign object tend to be forced towards the intermediate space from the side of the dual wheel facing the road, the overlap is most needed at the lower portion of the dual wheel.

The first ridge means 5 may comprise one or more first ridge portions 5a being radially offset from one or more corresponding second ridge portions 6a of said second ridge means 6, with respect to the rotational axis 7.

The radial offset enables use of thicker geometries of the first 5 and second 6 ridge means respectively and thus reduced the risk of a foreign object deforming the first 5 and second ridge means 6 respectively. Fig. 5 shows an example of ridge means with no radial offset, whilst fig. 6 shows ridge means with radial offset.

The first ridge means 5 may comprise one first ridge 5a portion extending along a whole circumference of the first sidewall SW1. The circumference could be any path extending on the first sidewall SW1 such that it forms a closed loop all the way around the first sidewall SW1.

By arranging the first ridge portion 5a such that it extends along a whole circumference of the first sidewall, a continuous ridge is provided around the circumference, thus avoiding gaps at the end of the first ridge portion 5a, thus reducing the risk of foreign objects, such as dirt, gravel, and stones, entering the intermediate space between the tires of the dual wheel. Further, the rigidity of the first ridge portion 5a is improved, since the first ridge portion 5a does not have any free ends.

The second ridge means 6 may comprise one second ridge portion 6a extending along a whole circumference of the second sidewall SW2. The circumference could be any path extending on the second sidewall SW2 such that it forms a closed loop all the way around the second sidewall SW2.

By arranging the second ridge portion 6a such that it extends along a whole circumference of the first sidewall, a continuous ridge is provided around the circumference, thus avoiding gaps at the end of the second ridge portion 6a, thus reducing the risk of foreign objects, such as dirt, gravel, and stones, entering the intermediate space between the tires of the dual wheel. Further, the rigidity of the second ridge portion 6a is improved, since the second ridge portion 6a does not have any free ends.

The first ridge means 5 may be provided radially inwards of the second ridge means 6 with respect to the rotational axis 7. Such embodiments are shown in figs. 1a-c and 3a-c. By providing the ridge means at different radial distance from the rotational axis of the dual wheel, the height/extend of the respective ridges can be increased without reducing the size of the other ridge means. This enables increased dimension of the ridge means, and thus enables use of more robust ridge means, withstanding higher local pressures from foreign objects forced against the ridge means.

### Single tire

As mentioned above, it is also proposed to provide a tire 2 for a dual wheel, said tire comprising a first sidewall SW1 and an opposite second sidewall SW2. As shown in figs. 1a-c, 2a-c and 3a-c, the first sidewall SW1 is provided with first ridge means 5 and the second sidewall SW2 is provided second ridge means 6. The first ridge means 5 and the second ridge means 6 are configured such that when two such tires 2, 3 are arranged side-by-side on a dual wheel 1 with first ridge means 5 of one tire 2 facing second ridge means 6 of another tire 3 and the two tires are deformed by a vehicle load from the vehicle 8, the facing first and second ridge means 5, 6 overlap along a rotational axis 7 of the dual wheel, said overlap occurring along at least an angular portion A of the circumference of the dual wheel 1.

The first ridge means 5 and the second ridge means 6 together bridge the intermediate space between the first sidewall and the second sidewall, thereby preventing foreign object entering the intermediate space. By configuring the first ridge means 5 and the second ridge means 6 such that they overlap along the rotational axis of the dual wheel, a foreign object would have to pass through a meandering path between the first ridge means 5 and the second ridge means 6 to be able to enter the intermediate space. Such a configuration of the dual tire thus further mitigates objects entering the intermediate space without requiring pressure of even any contact at all between the first ridge means 5 and the second ridge means 6. Reduced contact and reduced contact pressure between the first ridge means 5 and the second ridge means 6 reduces wear and risk of damage to the tires of the dual wheel.

The first ridge means 5 and second ridge means 6 may be configured such that adjacent first ridge means 5 and second ridge means 6 of the two tires, under normal operating conditions, do not touch when the two tires 2 are mounted on the dual wheel 1.

Normal operating conditions do not include short-term impacts caused by passing uneven terrain at speed, but rather relate to driving on flat roads at normal operating speeds with normal loads for which the vehicle and tire are rated. By avoiding prolonged contact between the first ridge means 5 and the second ridge means 6, friction between the first ridge means 5 and the second ridge means 6 is mitigated. Friction cause heating and premature wear of the tires.

The first ridge means 5 may comprise one or more first ridge portions 5a, 5b being radially offset from one or more corresponding second ridge portions 6a, 6b of said second ridge means 6, with respect to the rotational axis 7.

The radial offset enables use of thicker geometries of the first and second ridge means 6 respectively and thus reduced the risk of a foreign object deforming the first and second ridge means 6 respectively.

As shown in figs. 1a-c, the first ridge means 5 may comprise one first ridge portion 5a extending along a whole circumference of the first sidewall SW1.

By arranging the first ridge portion 5a such that it extends along a whole circumference of the first sidewall, a continuous ridge is provided around the circumference, thus avoiding gaps at the end of the first ridge portion 5a, thus reducing the risk of foreign objects, such as dirt, gravel, and stones, entering the intermediate space between the tires of the dual wheel. Further, the rigidity of the first ridge portion 5a is improved, since the first ridge portion 5a does not have any free ends.

As shown in figs. 1a-c, the second ridge means 6 may comprise one second ridge portion 6a extending along a whole circumference of the second sidewall SW2.

By arranging the second ridge portion 6a such that it extends along a whole circumference of the first sidewall, a continuous ridge is provided around the circumference, thus avoiding gaps at the end of the second ridge portion 6a, thus reducing the risk of foreign objects, such as dirt, gravel, and stones, entering the intermediate space between the tires of the dual wheel. Further, the rigidity of the second ridge portion 6a is improved, since the second ridge portion 6a does not have any free ends.

As shown in figs. 1a-c and 3a-c, the first ridge means 5 may be provided radially inwards of the second ridge means 6 with respect to the rotational axis 7.

### Tire with ridge means on only one side

The above-mentioned object is also achieved by a tire 10 for a dual wheel 1. The tire 10 comprises a first sidewall SW1 and an opposite second sidewall SW2. The first sidewall SW1 is provided with ridge means 9a, 9b, and the ridge means 9a, 9b is configured such that when two such tires 10 are arranged side-by-side on a dual wheel 1 with ridge means 9a, 9b of one of said two tires 10 facing another ridge means 9b, 9a of another one of said two tires 10 and the two tires 10 are deformed by a vehicle load from the vehicle 8, the facing ridge means 9a, 9b overlap along a rotational axis 7 of the dual wheel 1, said overlap occurring along at least an angular portion A of the circumference of the dual wheel 1. The first ridge means 5 and the second ridge means 6 together bridge the intermediate space between the first sidewall and the second sidewall, thereby preventing foreign object entering the intermediate space. By configuring the first ridge means 5 and the second ridge means 6 such that they overlap along the rotational axis of the dual wheel, a foreign object would have to pass through a meandering path between the first ridge means 5 and the second ridge means 6 to be able to enter the intermediate space. Such a configuration of the dual tire thus further mitigates objects entering the intermediate space without requiring pressure of even any contact at all between the first ridge means 5 and the second ridge means 6. Reduced contact and reduced contact pressure between the first ridge means 5 and the second ridge means 6 reduces wear and risk of damage to the tires of the dual wheel.

As shown in figs. 1c, 2c, 3c and 4c, all of the above-described embodiments of tires can be used on a dual wheel 1.

Also proposed is a vehicle 8 provided with one or more such dual wheels.

It is to be understood that the present invention is not limited to the embodiments described above and illustrated in the drawings; rather, the skilled person will recognize that many changes and modifications may be made within the scope of the appended claims.

**Table of reference numerals**

| | |
|---|---|
| 1 | dual wheel |
| 2 | first tire |
| 3 | second tire |
| 4 | intermediate space |
| 5 | first ridge means |
| 5a, 5b | first ridge portions |
| 6 | second ridge means |
| 6a, 6b | second ridge portions |
| 7 | rotational axis of dual wheel |
| 8 | vehicle |
| 9a | ridge means |
| 9b | ridge means |
| 10 | tire |
| SW1 | first sidewall |
| SW2 | second sidewall |
| A | angular portion |

## Claims

1. A pair of tires for a dual wheel (1) of a vehicle (8), said pair of tires comprising a first tire (2) and a second tire (3) to be arranged side-by-side when mounted on the dual wheel (1) such that a first sidewall (SW1) of the first tire (2) faces a second sidewall (SW2) of the second tire (3), with an intermediate space (4) formed between the first sidewall (SW1) and the second sidewall (SW2),
the first sidewall (SW1) being provided with first ridge means (5) protruding from the first sidewall (SW1) into the intermediate space (4),
the second sidewall (SW2) being provided with a second ridge means (6) protruding from the second sidewall (SW2) into the intermediate space (4), and
the first ridge means (5) and the second ridge means (6) being configured such that, when the pair of tires is mounted on the dual wheel (1) and the pair of tires is deformed by a vehicle load from the vehicle (8), the first ridge means (5) and the second ridge means (6) overlap along a rotational axis (7) of the dual wheel (1), said overlap occurring along at least an angular portion (A) of the circumference of the dual wheel (1).

2. A pair of tires according to claim 1, wherein the first ridge means (5) and the second ridge means (6) are configured such that they, under normal operating conditions, do not touch when the pair of tires is mounted on the dual wheel (1).

3. A pair of tires according to any one of claims 1-2, wherein the first ridge means (5) comprises one or more first ridge portions (5a, 5b) being radially offset from one or more corresponding second ridge portions (6a, 6b) of said second ridge means (6), with respect to the rotational axis (7).
a

4. A pair of tires according to claim 3, wherein the first ridge means (5) comprises one first ridge portion (5a, 5b) extending along a whole circumference of the first sidewall (SW1).

5. A pair of tires according to any one of claims 3-4, wherein the second ridge means (6) comprises one second ridge portion (6a, 6b) extending along a whole circumference of the second sidewall (SW2).

6. A pair of tires according to any one of claims 2-5, wherein the first ridge means (5) is provided radially inward of the second ridge means (6) with respect to the rotational axis (7).

7. A tire (2) for a dual wheel, said tire (2) comprising a first sidewall (SW1) and an opposite second sidewall (SW2),
the first sidewall (SW1) being provided with first ridge means (5),
the second sidewall (SW2) being provided second ridge means (6), and
the first ridge means (5) and the second ridge means (6) being configured such that when two such tires (2, 3) are arranged side-by-side on a dual wheel (1) with first ridge means (5) of one tire (2) facing second ridge means (6) of another tire (3) and the two tires are deformed by a vehicle load from the vehicle (8), the facing first (5) and second (6) ridge means overlap along a rotational axis (7) of the dual wheel, said overlap occurring along at least an angular portion (A) of the circumference of the dual wheel (1).

8. A tire (2) according to claim 7, wherein the first ridge means (5) and second ridge means (6) are configured such that adjacent first ridge means (5) and second ridge means (6) of the two ties, under normal operating conditions, do not touch when the two tires (2) are mounted on the dual wheel (1).

9. A tire (2) according to any one of claims 7-8, wherein the first ridge means (5) comprises one or more first ridge portions (5a) being radially offset from one or more corresponding second ridge portions (6a) of said second ridge means (6), with respect to the rotational axis (7).

10. A tire (2) according to claim 9, wherein the first ridge means (5) comprises one first ridge portion (5a) extending along a whole circumference of the first sidewall (SW1).

11. A tire (2) according to any one of claims 9-10, wherein the second ridge means (6) comprises one second ridge portion (6a) extending along a whole circumference of the second sidewall (SW2).

12. A tire (2) according to any one of claims 9-11, wherein the first ridge means (5) is provided radially inwards of the second ridge means (6) with respect to the rotational axis (7).

13. A tire (10) for a dual wheel (1), said tire (10) comprising a first sidewall (SW1) and an opposite second sidewall (SW2),
said first sidewall (SW1) being provided with ridge means (9a, 9b), and
the ridge means (9a, 9b) being configured such that when two such tires (10) are arranged side-by-side on a dual wheel (1) with ridge means (9a, 9b) of one of said two tires (10) facing another ridge means (9b, 9a) of another one of said two tires (10) and the two tires (10) are deformed by a vehicle load from the vehicle (8), the facing ridge means (9a, 9b) overlap along a rotational axis (7) of the dual wheel (1), said overlap occurring along at least an angular portion (A) of the circumference of the dual wheel (1).

14. A dual wheel (1) comprising a pair of tires (2) according to any one of claims 1-6 or two tires (2, 3, 10) according to any one of claims 7-13.

15. A vehicle (8) comprising at least one dual wheel (1) according to claim 14.

16. A vehicle (8) according to claim 15, said vehicle (8) being a truck, a bus, a tractor, a construction machine, or a trailer.
